# FASCICULE DE BREVET EUROPEEN

(11) **EP 2 618 121 B1**
(45) Date de publication et mention de la délivrance du brevet: **01.04.2015**
(21) Numéro de dépôt: 12305071.8
(22) Date de dépôt: 20.01.2012
(51) Int. Cl.: G01K 17/08

(54) **Répartiteur de coût de chauffage et câble de liaison pour montage déporté**
Heizkostenverteiler und Verbindungskabel zur versetzten Montage
Heating cost distributor and linking cable for remote installation

(43) Date de publication de la demande: 24.07.2013
(73) Titulaire: Itron France, 92130 Issy-Les-Moulineaux (FR)
(72) Inventeur: Arnaud-Godet, Brice, 71000 Macon (FR); Guillot-Jerome, Denis, 01310 Buellas (FR)
(74) Mandataire: Korenberg, Alexander Tal

(56) Documents cités:
- WO-A1-97/22863
- WO-A1-2007/039269
- DE-A1- 3 247 956
- US-A- 4 393 919

## Description

L'invention concerne un répartiteur de coût de chauffage et un câble de liaison pour montage déporté.

Elle concerne plus précisément un répartiteur de coût de chauffage destiné à être fixé sur un élément chauffant, par exemple un radiateur, et comportant dans un boîtier monté sur un adaptateur arrière une carte électronique connectée à un premier capteur de température destiné à la mesure de la température externe de la pièce et à un second capteur de température destiné à la mesure de la température de l'élément chauffant.

Ce premier capteur de température destiné à la mesure de la température externe de la pièce est classiquement disposé contre ou à proximité de la face intérieure du boîtier et éventuellement un élément conducteur thermique est disposé entre le capteur et cette face, afin d'assurer une mesure correcte de la température de la pièce.

De même, le second capteur de température destiné à la mesure de la température de l'élément chauffant est classiquement disposé contre ou à proximité de la face intérieure de l'adaptateur et éventuellement un élément conducteur thermique est disposé entre le capteur et cette face, afin d'assurer une mesure correcte de température de l'élément chauffant.

Un tel répartiteur est donc classiquement monté directement sur l'élément chauffant, en général un radiateur.

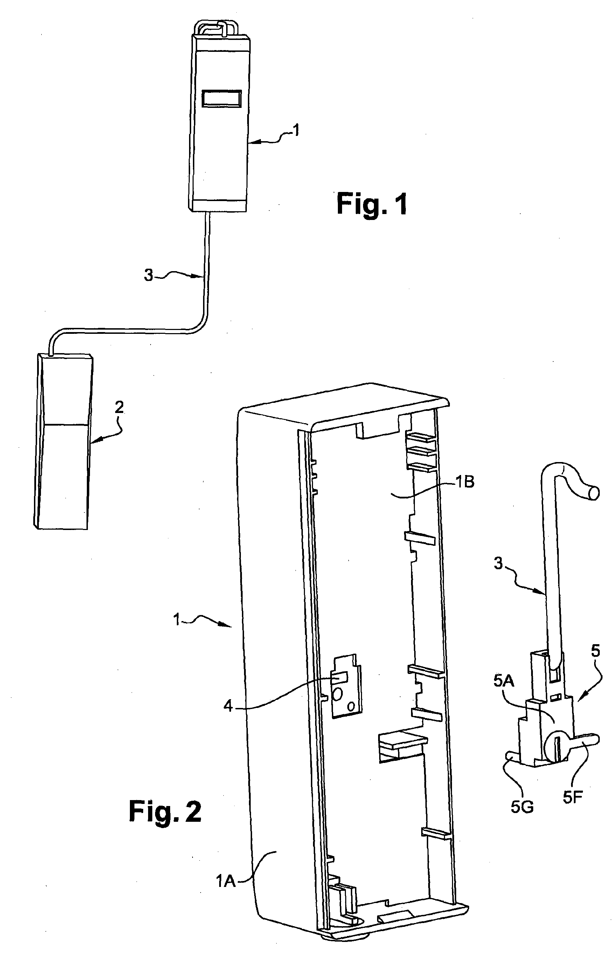

Il est connu également de monter un tel répartiteur de façon déportée telle qu'illustrée sur la figure 1. Dans ce cas, le répartiteur 1 est monté sur une paroi ou un mur pour la mesure de la température ambiante externe de la pièce et il est connecté par un câble de liaison 3 à un élément de mesure auxiliaire 2 de la température de l'élément chauffant monté quant à lui directement sur l'élément chauffant et pourvu d'un capteur opérationnel destiné à la mesure de la température de l'élément chauffant.

Les documents WO 97/22863, US 4393919 et DE 32 47 956 A1 décrivent différents exemples de répartiteurs de coût de chauffage.

Pour des raisons évidentes de standardisation, il est souhaitable qu'un répartiteur puisse être utilisé de façon directe ou de façon déportée, sans modification propre. En cas de fonctionnement de façon déportée, le câble de liaison 3 est connecté à la carte électronique du répartiteur 1 de façon à shunter ledit second capteur de température contenu dans le répartiteur et destiné à la mesure de la température de l'élément chauffant en fonctionnement direct et à connecter le capteur opérationnel de l'élément de mesure auxiliaire 2 de la température de l'élément chauffant à la carte électronique du répartiteur.

Cette connexion du câble de liaison peut se faire par soudure sur la carte électronique. Cependant, une telle soudure est complexe à réaliser sur site.

Cette connexion du câble de liaison peut se faire par un agencement de connecteur électrique classique de type comportant une partie mâle coopérant avec une partie femelle.

Le document WO 2007/039269A1 décrit un tel connecteur.

Cependant, le répartiteur standard doit alors toujours comporter une de ces deux parties, ce qui est relativement onéreux et peu utile, sachant qu'en général le montage déporté, où cette partie de connecteur est effectivement opérationnelle, correspond à quelques pour cent des montages de répartiteur.

Par ailleurs, il n'est pas souhaitable d'exercer un effort d'insertion sur la carte électronique lors de la connexion du câble de liaison, susceptible de contraintes préjudiciables à la carte électronique.

L'objet de l'invention est de proposer un tel agencement de connexion du câble de liaison sur la carte électronique du répartiteur qui résout ces problèmes.

Selon l'invention, nous décrivons donc un répartiteur de coût de chauffage, selon la revendication 1; un câble de liaison, selon la revendication 5; et un système selon la revendication 10.

Pour ce faire l'invention propose un répartiteur de coût de chauffage pouvant être fixé sur un élément chauffant, par exemple un radiateur, et comportant dans un boîtier monté sur un adaptateur une carte électronique principale connectée à un premier capteur de température destiné à la mesure de la température de la pièce et externe au boîtier et à un second capteur de température destiné à la mesure de la température de l'élément chauffant lorsque ledit adaptateur est monté directement sur ledit élément chauffant, ladite carte électronique principale comportant au moins un contact de connexion d'un câble de liaison à un élément de mesure auxiliaire déporté, de la température de l'élément chauffant, de façon à shunter ledit second capteur de température et à connecter un capteur opérationnel dudit élément de mesure auxiliaire à ladite carte électronique principale, répartiteur caractérisé en que ladite carte électronique principale comporte à proximité dudit contact de connexion un agencement de connexion d'un connecteur dudit cable.

Un telle connexion nécessite un très faible effort d'insertion sur la carte électronique principale et assure aucune contrainte préjudiciable à cette dernière.

La carte électronique principale est prise en sandwich lors de cette connexion et n'est de ce fait pas déformée.

Selon un mode de réalisation préféré, ledit agencement de connexion comporte un orifice traversant circulaire à tronçon radial de type trou de serrure et au moins un élément d'indexation.

De préférence, ledit élément d'indexation comporte au moins un orifice traversant d'indexation.

Ledit élément d'indexation peut comporter deux dits orifices traversants d'indexation.

L'invention concerne également un câble de liaison d'un élément de mesure auxiliaire deporté destiné à être monté sur un répartiteur tel que précisé ci-dessus, **caractérisé en ce** que ledit connecteur comporte au moins un contact à piston, une carte électronique et un organe d'actionnement rotatif, ledit contact à piston étant destiné à coopérer avec ledit contact de la carte électronique principale et monté sur la carte électronique dudit connecteur sur laquelle sont montés ledit câble et l'organe d'actionnement rotatif destiné à traverser ladite carte électronique principale.

La présence d'une carte électronique associée au connecteur permet le montage de composants électroniques sur celle-ci, en plus du connecteur en soi. Ces composants peuvent être spécifiques au fonctionnement de l'élément de mesure auxiliaire et permettre ainsi une réduction du coût du répartiteur standard.

Comme il sera précisé plus loin, le montage et le démontage de la connexion ne nécessite pas d'outil spécifique. Ils peuvent être effectués manuellement ou à l'aide d'un simple tournevis.

Selon un mode de réalisation préféré, ledit organe d'actionnement comporte un pion de verrouillage pourvu d'un tenon radial de type fixation à quart de tour.

De préférence, ledit organe d'actionnement comporte un levier d'actionnement manuel.

Avantageusement, ledit connecteur comporte au moins un pion d'indexation.

Ledit connecteur peut comporter deux dits pions d'indexation.

L'invention concerne également un système selon la revendication 10.
La figure 1 est une vue frontale d'un répartiteur de coût de chauffage monté de façon déportée.
La figure 2 est une vue en perspective d'un répartiteur de coût de chauffage ouvert, l'adaptateur arrière étant démonté, et du câble de liaison selon l'invention.
La figure 3 est une vue arrière d'un répartiteur de coût de chauffage selon l'invention, l'adaptateur arrière étant démonté.
La figure 4A est une vue en perspective éclatée d'un connecteur selon l'invention.
La figure 4B est une vue en perspective partielle de la figure 4A.
Les figures 5A et 5B sont des vues en perspective illustrant le montage d'un câble de liaison sur un répartiteur de coût de chauffage selon l'invention.

Comme représenté sur la figure 2, l'invention propose un répartiteur de coût de chauffage 1 pouvant être fixé sur un élément chauffant, par exemple un radiateur, et comportant dans un boîtier 1A monté sur un adaptateur arrière démonté sur la figure 2 une carte électronique principale 1B connectée à un premier capteur de température destiné à la mesure de la température externe de la pièce et à un second capteur de température destiné à la mesure de la température de l'élément chauffant lorsque l'adaptateur est monté directement sur l'élément chauffant.

La carte électronique principale 1B comporte au moins un contact de connexion 4 d'un câble de liaison 3 à un élément de mesure auxiliaire déporté 2, de la température de l'élément chauffant, de façon à shunter ledit second capteur de température et à connecter un capteur opérationnel de l'élément de mesure auxiliaire 2 à la carte électronique principale 1B.

La carte électronique principale 1B comporte à proximité de ce contact de connexion 4 un agencement de connexion d'un connecteur 5 du câble 3, cette connexion s'effectuant par traversée de la carte électronique principale 1B et par rotation parallèlement à la surface de la carte électronique principale 1B.

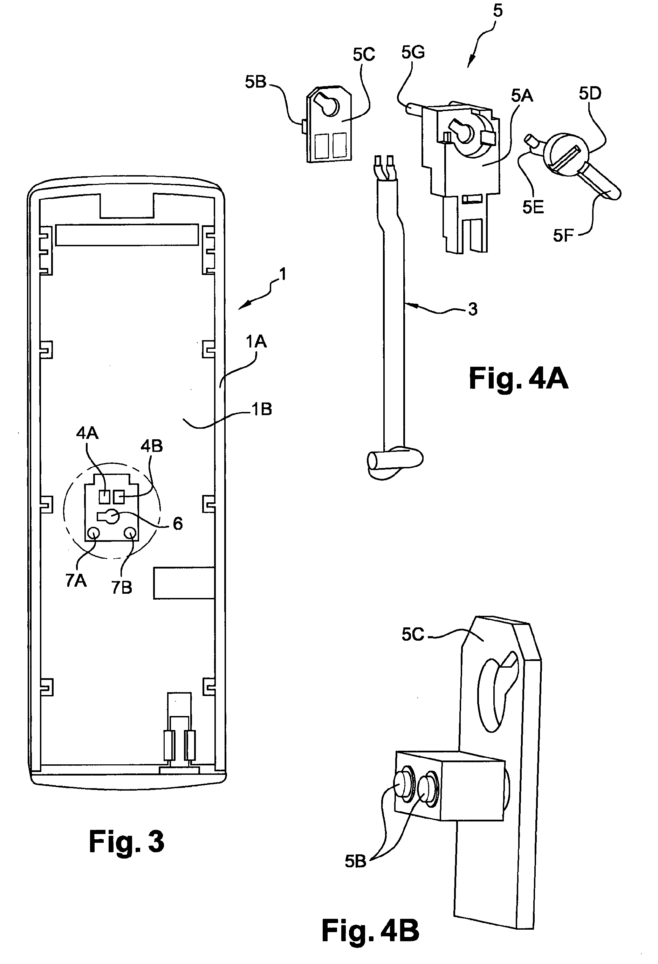

Cet agencement de connexion est particulièrement visible sur la figure 3.

Il comporte un orifice traversant circulaire à tronçon radial 6 de type trou de serrure et au moins un élément d'indexation. Cet élément d'indexation comporte au moins un orifice traversant d'indexation et de préférence deux orifices traversants d'indexation 7A, 7B.

Par ailleurs, la carte électronique principale 1B comporte ici deux contacts de connexion 4A, 4B.

Comme visible sur les figures 2 et 4A, le connecteur 5 du câble de liaison 3 comporte dans un boîtier 5A au moins un contact à piston 5B destiné à coopérer avec le contact 4 de la carte électronique principale 1B et monté sur une carte électronique 5C du connecteur sur laquelle sont montés le câble 4 de préférence par soudage et un organe d'actionnement rotatif 5D destiné à traverser la carte électronique principale 1B.

Dans l'exemple représenté et comme visible sur la figure 4B, la carte électronique principale 1B comportant ici deux contacts de connexion 4A, 4B, le connecteur 5 du câble de liaison 3 comporte deux contacts à piston 5B.

L'organe d'actionnement 5D comporte quant à lui un pion de verrouillage 5E pourvu d'un tenon radial de type fixation à quart de tour et un levier d'actionnement manuel 5F. Ce pion de verrouillage 5E traverse des orifices correspondants agencés de façon superposée respectivement sur le boîtier 5A et sur la carte électronique 5C.

Par ailleurs, le connecteur 5 comporte au moins un pion d'indexation, de préférence deux pions d'indexation 5G portés par son boîtier 5A.

Le montage du câble de liaison 3 sur la carte électronique principale 1B du répartiteur 1 s'opère comme suit.

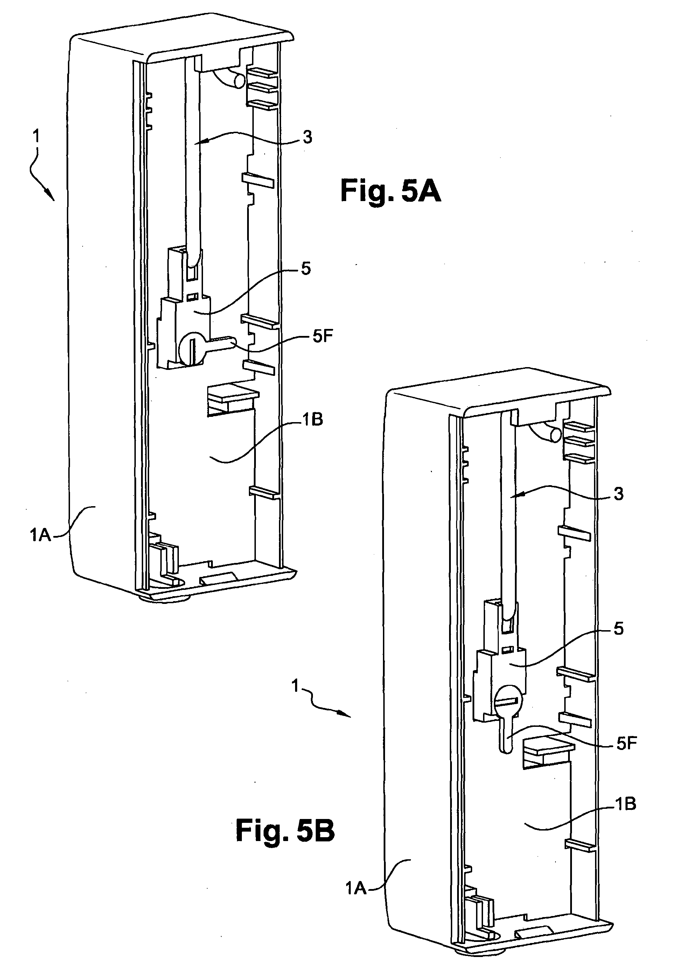

Une fois l'adaptateur arrière démonté, le connecteur 5 étant assemblé comme représenté sur la figure 2, il est approché de la carte électronique principale 1B. Les pions d'indexation 5G sont introduits dans les orifices d'indexation 7A, 7B de la carte électronique principale 1B, assurant ainsi son positionnement relatif correct sur celle-ci. Le connecteur 5 est alors appliqué contre la carte électronique 1B avec une pression perpendiculaire à la surface de cette carte 1B, les contacts à ressort 5B sont alors comprimés avec contact sur les contacts 4A, 4B de la carte 1B et le pion de verrouillage 5E est introduit dans l'orifice de type trou de serrure 6, comme représenté sur la figure 5A.

Il suffit alors de tourner le pion de verrouillage 5E par rotation du levier d'actionnement 5F, d'un quart de tour, comme représenté sur la figure 5B, pour connecter le câble 3 sur le répartiteur 1 tout en assurant par la coopération des contacts 4A, 4B, 5B le shunt du second capteur de température compris dans le répartiteur et la connexion d'un capteur opérationnel de l'élément de mesure auxiliaire 2 à la carte électronique principale 1B.

De préférence, la tête du pion de verrouillage 5E présente en plus du levier d'actionnement 5F, une rainure diamétrale qui permet également de monter ou démonter la connexion du câble de liaison 3 au moyen d'un tournevis.

## Revendications

1. Répartiteur de coût de chauffage (1) pouvant être fixé sur un élément chauffant, par exemple un radiateur, et comportant dans un boîtier (1A) monté sur un adaptateur une carte électronique principale (1B) connectée à un premier capteur de température destiné à la mesure de la température de la pièce et externe au boîtier (1A), et à un second capteur de température destiné à la mesure de la température de l'élément chauffant lorsque ledit adaptateur est monté directement sur ledit élément chauffant, ladite carte électronique principale (1B) comportant au moins un contact de connexion (4) d'un câble de liaison (3) à un élément de mesure auxiliaire déporté (2), de la température de l'élément chauffant, de façon à shunter ledit second capteur de température et à connecter un capteur opérationnel dudit élément de mesure auxiliaire (2) à ladite carte électronique principale (1B), répartiteur caractérisé en que ladite carte électronique principale (1B) comporte à proximité dudit contact de connexion (4) un agencement de connexion d'un connecteur (5) dudit câble (3).

2. Répartiteur selon la revendication précédente, **caractérisé en ce que** ledit agencement de connexion comporte un orifice traversant (6) circulaire à tronçon radial de type trou de serrure et au moins un élément d'indexation.

3. Répartiteur selon la revendication précédente, **caractérisé en ce que** ledit élément d'indexation comporte au moins un orifice traversant d'indexation.

4. Répartiteur selon la revendication précédente, **caractérisé en ce que** ledit élément d'indexation comporte deux dits orifices traversants d'indexation (7A, 7B).

5. Câble de liaison d'un élément de mesure auxiliaire déporté (3) destiné à être monté sur un répartiteur (1) selon l'une des revendications précédentes, ledit câble (3) comportant un connecteur (5), le connecteur (5) comportant au moins un contact à piston (5B), une carte électronique (5C) et un organe d'actionnement rotatif (5D), ledit contact à piston (5B) étant destiné à coopérer avec un contact (4) d'une carte électronique principale (1 B) du répartiteur (1), et ledit contact à piston étant monté sur la carte électronique (5C) dudit connecteur (5) sur laquelle sont montés ledit câble (3) et l'organe d'actionnement rotatif (5D) destiné à traverser ladite carte électronique principale (1 B).

6. Câble selon la revendication précédente, **caractérisé en ce que** ledit organe d'actionnement (5D) comporte un pion de verrouillage (5E) pourvu d'un tenon radial de type fixation à quart de tour.

7. Câble selon la revendication 5 ou 6, **caractérisé en ce que** ledit organe d'actionnement (5D) comporte un levier d'actionnement manuel (5F).

8. Câble selon l'une des revendications 5 à 7, **caractérisé en ce que** ledit connecteur comporte au moins un pion d'indexation.

9. Câble selon la revendication précédente, **caractérisé en ce que** ledit connecteur comporte deux dits pions d'indexation (5B).

10. Système comportant un répartiteur de coût de chauffage (1) selon l'une des revendications 1-4, et un câble de liaison (3) selon l'une des revendications 5-9, **caractérisé en ce que** ledit agencement de connexion du répartiteur (1) est adapté à se connecter au connecteur (5) dudit câble (3) par traversée de ladite carte électronique principale (1 B) par le connecteur (5), et par rotation dudit connecteur (5) parallèlement à la surface de ladite carte électronique principale (1 B).

## Patentansprüche

1. Heizkostenverteiler (1), der an einem Heizelement, beispielsweise einem Radiator, befestigt werden kann und in einem an einem Adapter montierten Gehäuse (1A) eine elektronische Hauptkarte (1B) aufweist, die mit einem ersten Temperaturfühler zur Messung der Temperatur des Raums und außerhalb des Gehäuses (1A) und mit einem zweiten Temperaturfühler zur Messung der Temperatur des Heizelements, wenn der Adapter direkt auf dem Heizelement montiert ist, verbunden ist, wobei die elektronische Hauptkarte (1B) mindestens einen Anschlusskontakt (4) für ein Verbindungskabel (3) zu einem seitlichen Hilfsmesselement (2) zur Messung der Temperatur des Heizelements aufweist, so dass der zweite Temperaturfühler parallel geschaltet und ein Betriebssensor des Hilfsmesselements (2) mit der elektronischen Hauptkarte (1B) verbunden wird, **dadurch gekennzeichnet, dass** die elektronische Hauptkarte (1B) in der Nähe des Anschlusskontakts (4) eine Anordnung zum Anschließen eines Steckverbinders (5) des Kabels (3) aufweist.

2. Verteiler nach dem vorhergehenden Anspruch, **dadurch gekennzeichnet, dass** die Anschlussanordnung eine kreisrunde Durchgangsöffnung (6) mit einem radialen Abschnitt nach Art eines Schlüssellochs und mindestens ein Indexierungselement aufweist.

3. Verteiler nach dem vorhergehenden Anspruch, **dadurch gekennzeichnet, dass** das Indexierungselement mindestens eine durchgehende Indexierungsöffnung aufweist.

4. Verteiler nach dem vorhergehenden Anspruch, **dadurch gekennzeichnet, dass** das Indexierungselement zwei durchgehende Indexierungsöffnungen (7A, 7B) aufweist.

5. Verbindungskabel (3) eines seitlichen Hilfsmesselements, welches Kabel dazu bestimmt ist, an einem Verteiler (1) nach einem der vorhergehenden Ansprüche montiert zu werden, wobei das Kabel (3) einen Steckverbinder (5) aufweist, wobei der Steckverbinder (5) mindestens einen Kolbenkontakt (5B), eine elektronische Karte (5C) und ein drehbares Betätigungsorgan (5D) auf weist, wobei der Kolbenkontakt (5B) dazu bestimmt ist, mit einem Kontakt (4) einer elektronischen Hauptkarte (1B) des Verteilers (1) zusammenzuwirken, und wobei der Kolbenkontakt auf der elektronischen Karte (5C) des Steckverbinders (5) montiert ist, an der das Kabel (3) und das drehbare Betätigungsorgan (5D) montiert sind, welches dazu bestimmt ist, die elektronische Hauptkarte (1B) zu durchsetzen.

6. Kabel nach dem vorhergehenden Anspruch, **dadurch gekennzeichnet, dass** das Betätigungsorgan (5D) einen Verriegelungsstift (5E) aufweist, der mit einem radialen Zapfen zur Fixierung um eine Vierteldrehung versehen ist.

7. Kabel nach Anspruch 5 oder 6, **dadurch gekennzeichnet, dass** das Betätigungsorgan (5D) einen Hebel (5F) zur manuellen Betätigung aufweist.

8. Kabel nach einem der Ansprüche 5 bis 7, **dadurch gekennzeichnet, dass** der Steckverbinder mindestens einen Indexierungsstift aufweist.

9. Kabel nach dem vorhergehenden Anspruch, **dadurch gekennzeichnet, dass** der Steckverbinder zwei Indexierungsstifte (5B) aufweist.

10. System mit einem Heizkostenverteiler (1) nach einem der Ansprüche 1 bis 4 und mit einem Verbindungskabel (3) nach einem der Ansprüche 5 bis 9, **dadurch gekennzeichnet, dass** die Anordnung zur Verbindung des Verteilers (1) geeignet ist, mit dem Steckverbinder (5) des Kabels (3) verbunden zu werden, indem der Steckverbinder (5) durch die elektronischen Hauptkarte (1B) hindurchgeführt und parallel zur Oberfläche der elektronischen Hauptkarte (1B) verdreht wird.

## Claims

1. Heating cost allocator (1) which can be fixed on a heating element, for example a radiator, and has, in a housing (1A) installed on a adapter, a main electronic card (1B) connected to a first temperature sensor intended for the measurement of the temperature of the room and outside the housing (1A), and to a second temperature sensor intended for the measurement of the temperature of the heating element when the said adapter is installed directly on the said heating element, the said main electronic card (1B) including at least one contact (4) for connection of a connecting cable (3) to an auxiliary element (2) for remote measurement of the temperature of the heating element in such a way as to shunt the said second temperature sensor and to connect an operational sensor of the said auxiliary measuring element (2) to the said main electronic card (1B), the allocator being **characterised in that** the said main electronic card (1 B) includes, close to the said connection contact (4), an arrangement for connection of a connector (5) of the said cable (3).

2. Allocator as claimed in the preceding claim, **characterised in that** the said connection arrangement includes a circular through opening (6) with a keyhole-type radial section and at least one indexing element.

3. Allocator as claimed in the preceding claim, **characterised in that** the said indexing element includes at least one indexing through opening.

4. Allocator as claimed in the preceding claim, **characterised in that** the said indexing element includes at least two such indexing through openings (7A, 7B).

5. Connecting cable (3) for a remote auxiliary measuring element intended to be installed on an allocator (1) as claimed in one of the preceding claims, the said cable (3) including at least one connector (5), the connector (5) including at least one piston contact (5B), an electronic card (5C) and a rotary actuating element (5D), the said piston contact (5B) being intended to co-operate with a contact (4) of a main electronic card (1 B) of the allocator (1), and the said piston contact being installed on an electronic card (5C) of the said connector (5) on which are installed the said cable (3) and a rotary actuating element (5D) intended to pass through the said main electronic card (1 B).

6. Cable as claimed in the preceding claim, **characterised in that** the said actuating element (5D) includes a locking pin (5E) provided with a radial lug of the quarter turn fixing type.

7. Cable as claimed in Claim 5 or 6, **characterised in that** the said actuating element (5D) includes a manual actuating lever (5F).

8. Cable as claimed in any one of Claims 5 to 7, **characterised in that** the said connector includes at least one indexing lug.

9. Cable as claimed in the preceding claim, **characterised in that** the said connector includes two such indexing lugs (5B).

10. System including a heating cost allocator (1) as claimed in any one of Claims 1 to 4, and a connecting cable (3) as claimed in any one of Claims 5 to 9, **characterised in that** the said arrangement for connection of the allocator (1) is adapted to be connected to the connector (5) of the said cable (3) by passage of the connector (5) through the said main electronic card (1 B), and by rotation of the said connector (5) parallel to the surface of the said main electronic card (1 B).
